# EUROPEAN PATENT SPECIFICATION

(11) **EP 4 429 286 B1**
(45) Date of publication and mention of the grant of the patent: **09.12.2026**
(21) Application number: 22888996.0
(22) Date of filing: 14.09.2022
(51) Int. Cl.: H04W 4/48, G06F 16/28, G06F 16/2457, H04L 67/12, H04L 67/55, H04L 67/51

(54) **ON-BOARD COMMUNICATION METHOD, APPARATUS AND DEVICE, AND STORAGE MEDIUM**
BORDKOMMUNIKATIONSVERFAHREN, -VORRICHTUNG UND -VORRICHTUNG SOWIE SPEICHERMEDIUM
PROCÉDÉ DE COMMUNICATION EMBARQUÉ, APPAREIL ET DISPOSITIF, ET SUPPORT DE STOCKAGE

(30) Priority: 04.11.2021 CN 202111299891
(43) Date of publication of application: 11.09.2024
(73) Proprietor: Ningbo Lotus Robotics Co., Ltd., Ningbo, Zhejiang 315335 (CN)
(72) Inventor: HAN, Qingyang, Wuhan, Hubei 430056 (CN); CHENG, Xuetao, Wuhan, Hubei 430056 (CN); ZHANG, Jie, Wuhan, Hubei 430056 (CN); YU, Yingjun, Wuhan, Hubei 430056 (CN); PAN, Jianwei, Wuhan, Hubei 430056 (CN); LI, Bo, Wuhan, Hubei 430056 (CN)
(74) Representative: Metida
(86) International application number: PCT/CN2022/118704
(87) International publication number: WO 2023/077968

(56) References cited:
- CN-A- 107 111 565
- CN-A- 108 540 361
- CN-A- 109 874 123
- CN-A- 114 268 927
- US-A1- 2016 050 269
- US-A1- 2017 124 871
- US-A1- 2021 152 639

## Description

### CROSS-REFERENCE TO RELATED APPLICATIONS

This application is the national phase entry of International (PCT) Patent Application No. PCT/CN2022/118704, filed on September 14, 2022, which is based upon and claims the priority to Chinese Patent Application No. 202111299891.1, filed on November 4, 2021.

### TECHNICAL FIELD

The present application relates to field of vehicle communication technology, in particular to an on-board communication method, a device, and a storage medium.

### BACKGROUND

With the rapid development of vehicle intelligence, network and electrification, especially the maturity of autonomous driving and intelligent network technologies, the requirements for on-board communication are becoming more and more diverse and demanding.

At present, commonly used on-board communication mechanisms include CAN, FlexRay and related communication protocols based on Ethernet such as Some/IP.

Wherein the CAN communication has low cost, high reliability and good real-time performance, but there are problems such as low bandwidth, poor flexibility, and the maximum communication rate is only 2Mbps, which cannot meet the requirements of automatic driving and intelligent network system for high data throughput.

Although the single-channel communication rate of FlexRay communication reaches 10Mbps, it still cannot meet the transmission of large amounts of data such as lidar, 4D imaging radar, high-precision positioning and cloud communication.

Although Ethernet can support the transmission rate of 100Mbps, 1Gbps and even 10Gbps, the communication mechanism of on-board Ethernet is not perfect at present, and cannot fully meet the requirements of security, real-time, and flexibility.

Therefore, an on-board secure communication mechanism that can meet the large data throughput of autonomous driving and intelligent network systems is urgently needed.

Documents of US2021/152639A1 and US2017124871A1 have disclosed some examples.

### SUMMARY

The embodiment of the present application provides an on-board communication method, a device, and a storage medium, which can solve the needs of large data throughput, and has high security and good real-time data transmission; the implementation of service-based architecture design is also supported while the communication requirements of automatic driving and intelligent connected systems are met.

The present invention provides an on-board communication method, a device, and a storage medium as set out in the appended set of claims.

### BRIEF DESCRIPTION OF THE DRAWINGS

In order to illustrate the technical solutions of the embodiments of the present application more clearly, the drawings used below for the description of the embodiments will be introduced briefly. It should be understood that the following drawings only illustrate some embodiments of the present application, a person skilled in the art may further obtain other relevant drawings according to these drawings without creative work.
FIG. 1 is a schematic diagram of an application scene provided in the embodiment of the present application;
FIG. 2 is a flow chart of an on-board communication method provided in the embodiment of the present application;
FIG. 3 is a schematic flow diagram of an on-board communication method provided in the embodiment of the present application;
FIG. 4 is a schematic flow diagram of an on-board communication method provided in the embodiment of the present application;
FIG. 5 is a schematic flow diagram of a process of obtaining data based on first theme information published by first publishing entity provided in the embodiment of the present application;
FIG. 6 is a schematic flow diagram of a process of sending data to a subscription entity provided in the embodiment of the present application;
FIG. 7 is a schematic diagram of a communication scene provided in the embodiment of the present application;
FIG. 8 is a schematic flow diagram of the process of sending data to a subscription entity in the embodiment of the present application;
FIG. 9 is a schematic diagram of a communication scene provided in the embodiment of the present application;
FIG. 10 is a schematic diagram of a communication scene provided in the embodiment of the present application;
FIG. 11 is a schematic diagram of a communication scene provided in the embodiment of the present application;
FIG. 12 is a structural diagram of an on-board communication apparatus provided in the embodiment of the present application;
FIG. 13 is a hardware structure block diagram of a server for an on-board communication method provided in the embodiment of the present application.

### DETAILED DESCRIPTION OF PREFERRED EMBODIMENTS

A clear and complete description of the technical scheme in the embodiment of the present application is given below in combination with the attached drawings in the embodiment of the present application. Obviously, the embodiment described is only a part of the embodiment of the present application, but not all embodiments. Based on the embodiments in the present application, all other embodiments obtained by ordinary technicians in the field without creative labor shall fall within the scope of protection of the present application.

It should be noted that the terms "first" and "second" in the description and claims of the present application and in the above attached drawings are used to distinguish similar objects, and do not have to be used to describe a specific order or sequence. It shall be understood that the data so used may be interchangeable, where appropriate, so that embodiments of the present application described herein may be implemented in a sequence other than those illustrated or described herein. In addition, the terms " comprising" and "having", and any variations thereof, are intended to cover non-discharging comprising, for example, a process, method, system, product or server that comprising a sequence of steps or units need not be limited to those steps or units that are clearly listed. Rather, it may include other steps or units that are not clearly listed or inherent to such processes, methods, products or units.

At present, with the rapid development of autonomous driving, vehicle network and service-based architecture design technology, the requirements for data throughput of vehicle systems are increasingly significant, and at the same time, higher demand for data security, real-time, efficient and flexible transmission is put forward. Traditional CAN and FlexRay, due to their low data rates and poor flexibility, have been unable to meet the current communication transmission needs.

Based on this, the embodiment of the present application provides an on-board communication method, which can meet the needs of large data throughput of automatic driving and intelligent network systems, and at the same time, realizes safe, real-time, efficient and flexible data transmission, the implementation of service-based architecture design is also supported while the communication requirements of automatic driving and intelligent connected systems are met.

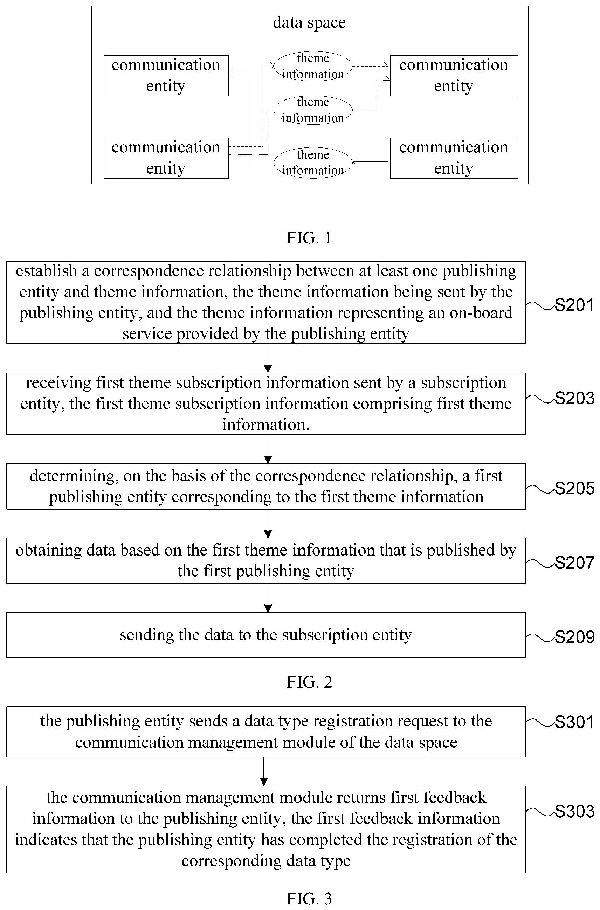

Referring to FIG. 1, FIG. 1 is a schematic diagram of an application scene provided in the embodiment of the present application, comprising a data space and a plurality of communication entities;
Wherein the data space can be understood as a local area network, and only communication entities in the same data space can communicate with each other; the communication entity has the function of subscribing data and publishing data. The data space comprises a communication management module, for processing data interaction between different communication entities.

The data space can have different definitions in different application scenes, for example, there are many Electronic Control Units (ECUs) on the vehicle for realizing different functions, for a single ECU, it can be a data space, each application in the ECU is equivalent to a communication entity, each application can provide different services, and each application can communicate with each other, publishing and subscribing corresponding data; another example is that a plurality of ECUs can form a data space where each ECU is equivalent to a communication entity; for example, the data space can also be a vehicle network.

FIG. 2 is a flow chart of an on-board communication method provided in the embodiment of the present application, as shown in FIG. 2, take the on-board communication method applied to the communication management module in the data space as an example, comprising the following steps:
in step S201, establishing a correspondence relationship between at least one publishing entity and theme information, the theme information being sent by the publishing entity, and the theme information representing an on-board service provided by the publishing entity.

In the embodiment of the present application, the publishing entity sends theme information to the communication management module in the data space, the theme information represents the on-board services provided by the publishing entity. For example, for an on-board parking system, the system can provide valet parking, automatic parking and many other services, wherein each of the service is respectively corresponds to a theme. For another example, for a sensing system, the system can provide lane line detection, traffic light detection, obstacle detection and other services, wherein the lane line detection can be a theme. Specifically, the theme information can comprise theme identification and/or theme name, wherein the theme identification can be a preset character string.

After receiving the theme information sent by the publishing entity, the communication management module establishes the correspondence relationship between the publishing entity and the theme information. For example, in an application scene, the publishing entity is a sensing system. The theme information sent by the publishing entity to the communication management module can comprise lane line detection, traffic light detection, and obstacle detection. The communication management module establishes the correspondence relationship between the sensing system and lane line detection, traffic light detection, obstacle detection, and storing.

Before the publishing entity sends the theme information to the communication management module, in an optional embodiment, as shown in FIG. 3, the on-board communication method may comprise the following steps:
in step S301, the publishing entity sends a data type registration request to the communication management module of the data space.

Wherein, the data type registration request represents the data type corresponding to the theme information to be published by the publishing entity. Because different publishing entities publish different data types of data based on different theme information, different data types include string, matrix, queue, and so on. In order to facilitate data management, the publishing entity needs to complete the registration of data type before sending the theme information to the communication management module.

In step S303, the communication management module returns first feedback information to the publishing entity, the first feedback information indicates that the publishing entity has completed the registration of the corresponding data type.

In further optional embodiments, the communication management module receives the theme information sent by the publishing entity, generates corresponding theme information in the data space, and returns second feedback information to the publishing entity, indicating that the publishing entity has completed the publishing of the theme information.

In step S203, receiving first theme subscription information sent by a subscription entity, the first theme subscription information comprising first theme information.

In the embodiment of the present application, the communication management module can generate a plurality of theme information in response to the theme information sent by a plurality o publishing entities, and the plurality of theme information can be subscribed by the subscribing entities in the same data space. The subscription entity can query the theme information it needs among all the theme information, and then send corresponding subscription information to the communication management module.

In an optional implementation, the communication management module receives the first theme subscription information sent by the subscription entity, the first theme subscription comprises the first theme information.

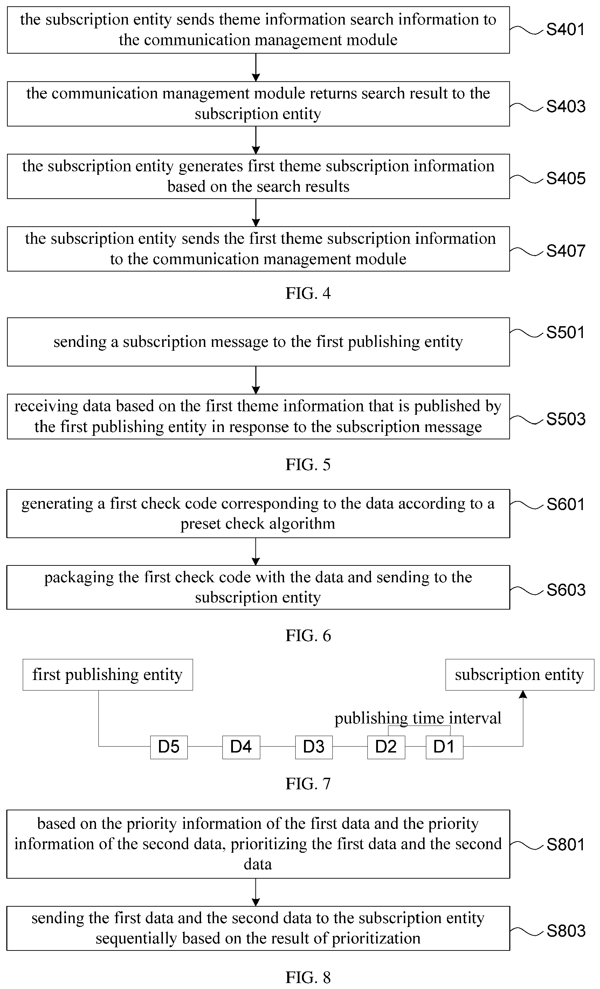

Before the communication management module receives the first theme subscription information sent by the subscription entity, in an optional implementation, as shown in Fig. 4, the on-board communication method may further comprise the following steps:
in step S401, the subscription entity sends theme information search information to the communication management module.

Wherein the theme information search information can comprise the on-board service information required by the subscription entity. For example, in an application scene, the subscription entity can be a vehicle turning application, the vehicle turning application needs to perceive the lane line detection service provided by sensing system, then the theme information search information can comprise the theme name and/or theme identification corresponding to the lane line detection.

In step S403, the communication management module returns search result to the subscription entity.

In some scenes, if the subscription entity does not know the accurate theme name and/or theme identification corresponding to the required on-board service information, then can fuzzy search through keywords. The communication management module can package associated theme information based on keywords to generate corresponding search results and return them to the subscription entity.

In step S405, the subscription entity generates first theme subscription information based on the search results.

In step S407, the subscription entity sends the first theme subscription information to the communication management module.

Wherein the first theme subscription information comprises first theme information, the first theme information is the theme information that the subscription entity wants to subscribe. The subscription entity determines the theme information to be subscribed from the search result based on actual application requirement, and generates the corresponding first theme subscription information, and then sends it to the communication management module.

In step S205, determining, on the basis of the correspondence relationship, a first publishing entity corresponding to the first theme information.

In the embodiment of the present application, the communication management module determines the first publishing entity corresponding to the first theme information based on the correspondence relationship. For example, in the above application scene, the subscription entity is a vehicle turning application, and the first theme information it sends to the communication management module is lane line detection; the communication management module, based on the correspondence relationship, can determine that the publishing entity corresponding to lane line detection is the sensing system.

In step S207, obtaining data based on the first theme information that is published by the first publishing entity.

In step S209, sending the data to the subscription entity.

In the embodiment of the present application, the communication management module obtains the data based on the first theme information published by the first publishing entity, and then sends the data to the subscription entity.

In an optional embodiment, obtaining data based on the first theme information published by the first publishing entity, may comprise the following steps as shown in FIG. 5:
in step S501, sending a subscription message to the first publishing entity.

In step S503, receiving data based on the first theme information that is published by the first publishing entity in response to the subscription message.

Specifically, after the communication management module determines the first publishing entity corresponding to the first theme information, it sends a subscription message to the first publishing entity, the subscription message can carry the theme identification of the first theme information of the first publishing entity which is subscribed. Thus, the first publishing entity responds to the subscription message by publishing data based on the first theme information in the data space. For example, the sensing system responds to the lane line detection subscription information, and publishes lane line detection data based on the lane line detection theme information in the data space, so that the vehicle steering application can obtain the lane line detection data from the data space.

In order to solve a series of problems such as data damage, data insertion and periodic data timeout caused by data transmission, in the embodiment of the present application, a series of security policies can be added to the communication mechanism, so as to ensure the safety and integrity of data transmission and solve the functional safety requirements of the automatic driving system for data transmission.

Based on this, in an optional embodiment, sending the data to the subscription entity, may comprise the following steps shown in FIG. 6:
in step S601, generating a first check code corresponding to the data according to a preset check algorithm.

In step S603, packaging the first check code with the data and sending to the subscription entity.
wherein the subscription entity is used for determining a second check code according to the preset check algorithm and received data, and determining the accuracy of the received data based on the first check code and the second check code.

Specifically, the preset check algorithms may include but are not limited to any of cyclic redundancy check, parity check, vertical redundancy, and checksum.

Cyclic redundancy check detects damage and insertion during data transfer by continuous division of polynomials, and can detect all unit failures and most multi-bit failures. When using the cyclic redundancy check, the first check code generating process is as follows:
First, data to be transmitted is represented as a string of bytes:
   $B \left(x\right) = {B}_{n} \left(x\right) * {2}^{8 n} + {B}_{n - 1} \left(x\right) * {2}^{8 \left(n-1\right)} + … + {B}_{1} \left(x\right) * {2}^{8} + {B}_{0} \left(x\right) ;$
then, the generated polynomial of the cyclic redundancy code is as follows:
   $A \left(x\right) = {x}^{18} + {x}^{14} + {x}^{8} + 1 ;$
in binary, it is represented as 1000100000100000001;
then, the data in the form of a string of bytes is shifted 18 bits left and divided by generated polynomial to obtain characteristic code of memory as follows:
   $B \left(x\right) {* x}^{18} / A \left(x\right) = G \left(x\right) + C \left(x\right) / A \left(x\right) ;$
wherein G(x) is quotient and C(x) is the first check code;
after generating the first check code, packing the first check code with the data and sending to the subscription entity, the subscription entity obtains the second check code through the same algorithm, comparing the second check code with the first check code, so as to determine the accuracy of the data, that is, whether the data is damage in the transmission process.

The checksum can better detect the failure of the unit, and has low requirements for computing performance, and is suitable for data transmission with low security level. The process of using the checksum to generate the first check code is as follows:
First, the data to be transmitted is represented as a string of bytes:
   $B \left(x\right) = {B}_{n} \left(x\right) * {2}^{8 n} + {B}_{n - 1} \left(x\right) * {2}^{8 \left(n-1\right)} + … + {B}_{1} \left(x\right) * {2}^{8} + {B}_{0} \left(x\right) ;$
then, the byte string is divided into a group of four bytes into (n+1)/4 groups of data, thereby transforming into a data group of 4 bytes in length, marked as K=[K₍ₙ₊₁₎/4,K₍ₙ₋₃₎/4..., K₂, K₁];
then, accumulating the data of K, generating a 6-byte data M=K_{(n+1)/4}+K_{(n-3)/4}...+K₂+K₁, the spare bit is filled with 0;
then, 6 bytes of the M are divided into 2 groups, respectively the first three bytes is a group of C and the last three bytes is a group of D, C and D are added together to obtain the corresponding checksum as the first check code; the subscription entity calculates the second check code through the same algorithm, and compares the difference between the first check code and the second check code, so as to determine whether the data is damaged or inserted during the transmission process.

In the embodiment of the present application, the communication management module defines the data sending cycle of the publishing entity and the subscription entity to detect the time-out of the transmitted data.

In an optional embodiment, when the first publishing entity publishes data based on the first theme information continuously, the method further comprises:
monitoring the publishing time interval between adjacent data in the data based on the first theme information that the first publishing entity continuously publishes;
   and/or;
monitoring the receiving time interval between adjacent data in the data based on the first theme information that the subscription entity continuously receives.

In further optional embodiments, the above monitoring the publishing time interval between adjacent data in the data based on the first theme information that the first publishing entity continuously publishes comprises:
if the publishing time interval between adjacent data in the data based on the first theme information that the first publishing entity continuously publishes is greater than or equal to a first preset time interval, generating a first error prompt message.

As shown in FIG. 7, the data continuously published by the first publishing entity comprises D1, D2, D3, D4 and D5. The communication management module sets a sending cycle corresponding to the first publishing entity in advance as a first preset time interval. When the first publishing entity published the data based on the first theme information continuously, determining the publishing time interval between D1 and D2, D2 and D3, D3 and D4, and D4 and D5, and then comparing the publishing time interval with the first preset time interval. If the publishing time interval is larger than the first preset time interval, the publishing time interval between adjacent data is too long, and generates the first error prompt message. In this way, for some data with high real-time requirements, timeout detection can check the timeout error in the process of data transmission and sending, which can ensure the security of data transmission.

In further optional embodiments, the above monitoring the receiving time interval between adjacent data in the data based on the first theme information that the subscription entity continuously receives may comprise:
if the receiving time interval between adjacent data in the data based on the first theme information that the subscription entity continuously receives is greater than or equal to a second preset time interval, generating a second error prompt message.

For example, for the subscription entity of vehicle steering application, the steering module needs to send a steering command to a steering actuator to realize the steering of the vehicle, under normal condition, the steering command needs to be sent every 20ms, If the time expires, for example, 40ms has not sent the next frame of steering command, it may cause the vehicle to be unable to turn in time, resulting in serious safety problems. Therefore, monitoring the timeout for the data continuously received by the subscription entity, when the receiving time interval between adjacent data is greater than or equal to the second preset time interval, generates the second error prompt message. For example, in the above scene, the second preset time interval can be any time less than 20ms.

In further optional embodiments, for data with high real-time requirements, time-outs monitoring are performed on both data sent by the publishing entity and data received by the subscription entity. On the one hand, if it is judged that the publishing period of the publishing entity is long, the step of sending data to the subscription entity can not be executed, so as to avoid the waste of resources caused by invalid data in the communication process. On the other hand, even if the publishing period of the publishing entity is qualified, due to other factors in the transmission process, the receiving time interval between adjacent data received by the subscription entity will become longer. In this way, by simultaneously monitoring the data sent by the publishing entity and the data received by the subscription entity, it can avoid the impact of data timeout on vehicle safety.

For subscription entity, it usually needs to subscribe a plurality of theme information, the plurality of theme information may come from different publishing entities. Thus, in an optional embodiment, before sending the data to the subscription entity as described above, the on-board communication method may also comprise:
receiving second theme subscription information sent by the subscription entity; the second theme subscription information comprises second theme information;
Based on the correspondence relationship, determining a second publishing entity corresponding to the second theme information;
Obtaining data based on the second theme information published by the second publishing entity.

For example, in one application scene, the vehicle steering application also needs to subscribe a location service provided by vehicle location system; similarly, the vehicle location system and sensing system need to first register the data type corresponding to the location data to the communication management module in the data space, and then generate the theme information corresponding to the location service in the data space. The above second theme information may comprise theme name and/or theme identification corresponding to the location service; after the subscription entity sends the second theme information to the communication management module, the communication management module can determine the vehicle location system as the corresponding second publishing entity based on the correspondence relationship, and then obtain location data based on location services published by the vehicle location system.
Considering that the data transmission process is affected by the bandwidth, once the subscription entity subscribes a lot of theme information, it may cause data blocking. Based on this, in an optional embodiment, first data published by the first publishing entity based on the first theme information and second data published by the second publishing entity based on the second theme information both carry priority information;
sending data to a subscription entity may comprise the following steps as shown in FIG. 8:
   in step S801, based on the priority information of the first data and the priority information of the second data, prioritizing the first data and the second data.

In step S803, sending the first data and the second data to the subscription entity sequentially based on the result of prioritization.

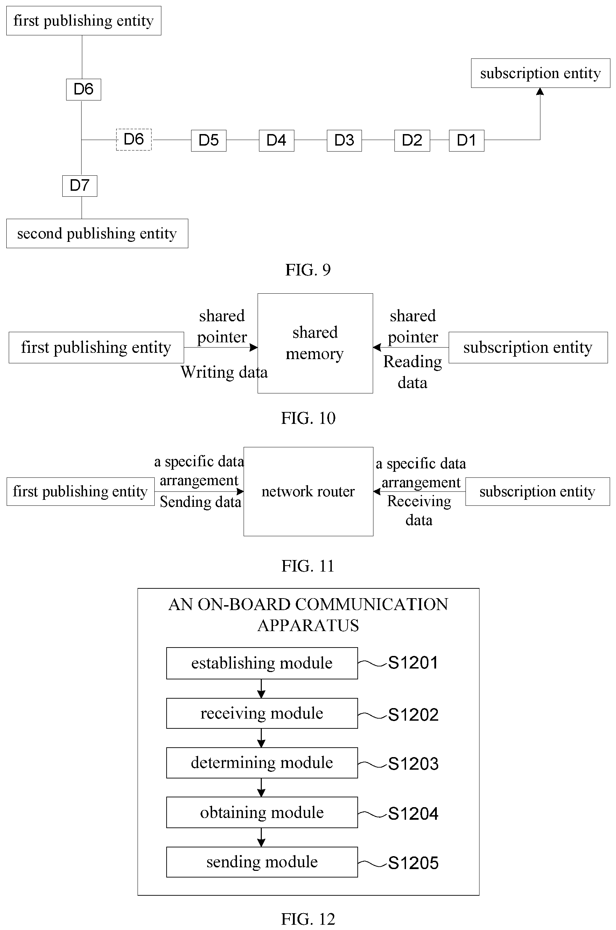

As shown in FIG. 9, the first publishing entity sets the corresponding priority to level 5 for the transmitted data D6 through the priority setting module, and the second publishing entity sets the corresponding priority to level 1 for the transmitted data D7 through the priority setting module. Wherein level 1 is the highest, level 5 is the lowest, the setting of priority can be set according to the needs, and the present application is not limited; when data blocking is detected, the data with high priority (D7) will be sent preferentially, so that the real-time transmission of data with high security can be ensured, which can meet the requirements of the automatic driving system for real-time data.

In embodiments of the present application, the publishing entity and the subscription entity are different electronic control units, or the publishing entity and the subscription entity are different modules within the same electronic control unit. For different cases, adopting different communication modes, that is, in the device with shared memory, adopting the shared pointer for data transmission, and in other cases, adopting the unified data queue for data transmission.

Wherein shared memory, as the name implies, allows two non-related processes to access the same logical memory, shared memory is a very efficient way to share and transmit data between two running processes. The memory shared between different processes is usually the same physical memory. Processes can connect the same physical memory to their own address space, and all processes can access addresses in shared memory. If a process writes data to shared memory, the modification will immediately affect any other process that can access the same segment of shared memory.

In an optional embodiment, when the first publishing entity and the subscription entity are different modules in the same electronic control unit, there is shared memory between the first publishing entity and the subscription entity; Correspondingly, the above obtaining data based on the first theme information published by the first publishing entity may comprise:
Receiving data based on the first theme information in the address space corresponding to the shared memory written by the first publishing entity;
Correspondingly, the above sending data to the subscription entity may comprise:
   Sending a notification to the subscription entity, so that the subscription entity responds to the notification by reading the data based on the first theme information in the address space corresponding to the shared memory, which is written in the address space corresponding to the shared memory by the first publishing entity.

Specifically, as shown in FIG. 10, the publishing entity directly writes data in the corresponding address space of the shared memory through the shared pointer, and the subscription entity directly reads data in the corresponding address space through the shared pointer after receiving the notification. Compared with the traditional communication mechanism, this mechanism does not have data copy in the transmission process, reducing copy times in the data transmission process, so it can meet the low latency requirements of large data transmission. Meanwhile, by adding the security policies described above in the data writing process, such as cyclic redundancy check and memory check sum, the integrity of data in the transmission process can be guaranteed. It can greatly improve the safety of data transmission and meet the functional safety requirements of automatic driving system for data transmission.

In another optional embodiment, when the first publishing entity and the subscription entity is different electronic control unit, correspondingly, the above obtaining data based on the first theme information published by the first publishing entity, can comprise:
Obtaining the data based on the first theme information sent by the first publishing entity through network router;
Correspondingly, the above sending data to the subscription entity may comprise:
   forwarding the data based on the first theme information sent by the first publishing entity to the subscription entity through the network router.

Specifically, as shown in FIG. 11, the publishing entity sends data to the network router in the form of a specific data arrangement, and the subscription entity receives the data from the router after receiving the notification. Compared with the traditional communication mechanism, this mechanism transmits data by means of specific data arrangement, which can reduce the process of data serialization and deserialization, and improve the speed of data transmission. Meanwhile, security policies such as cyclic redundancy check, checksum and counter introduced above are added in the process of data transmission. It can ensure the integrity of data in the transmission process, greatly improve the safety of data transmission, and meet the functional safety requirements of automatic driving system for data transmission.

In summary, the on-board communication method provided in the embodiment of the present application can solve the needs of large data throughput, and the data transmission is high security and good real-time; in order to meet the requirements of autonomous driving and intelligent network system communication, it also supports the realization of service-oriented architecture design.

The embodiment of the present application also provides an on-board communication apparatus. FIG. 12 is a structural diagram of an on-board communication apparatus provided in the embodiment of the present application, as shown in FIG. 12. The apparatus comprises:
establishing module 1201, configured to execute establishing a correspondence relation between at least one publishing entity and theme information, the theme information being sent by the publishing entity; the theme information representing an on-board service provided by the publishing entity;
receiving module 1202, configured to execute receiving first theme subscription information sent by a subscription entity; the first theme subscription information comprising first theme information;
determining module 1203, configured to execute determining a first publishing entity corresponding to the first theme information based on the corresponding relation;
obtaining module 1204, configured to execute obtaining data based on the first theme information that is published by the first publishing entity;
sending module 1205, configured to execute sending the data to the subscription entity;
wherein the publishing entity and the subscription entity being different electronic control units, or the publishing entity and the subscription entity being different modules in the same electronic control unit.

Optionally, sending module1205, configured to execute:
generating a first check code corresponding to the data according to a preset check algorithm;
packaging the first check code with the data and sending to the subscription entity; the subscription entity is used for determining a second check code according to the preset check algorithm and received data, determining the accuracy of the received data based on the first check code and the second check code.

Optionally, obtaining module 1204, configured to execute:
sending a subscription message to the first publishing entity;
receiving the data based on the first theme information that is published by the first publishing entity in response to the subscription message.

Optionally, when the first publishing entity publishes data based on the first theme information continuously, the apparatus further comprises monitoring module, configured to execute:
monitoring publishing time interval between adjacent data in the data based on the first theme information that the first publishing entity continuously publishes;
   and/or;
monitoring receiving time interval between adjacent data in the data based on the first theme information that the subscription entity continuously receives.

Optionally, monitoring module, configured to execute:
if the publishing time interval between adjacent data in the data based on the first theme information that the first publishing entity continuously publishes is greater than or equal to a first preset time interval, generating a first error prompt message.

Optionally, monitoring module, configured to execute:
if the receiving time interval between adjacent data in the data based on the first theme information that the subscription entity continuously receives is greater than or equal to a second preset time interval, generating a second error prompt message.

Optionally, receiving module, further configured to execute:
receiving second theme subscription information sent by the subscription entity; the second theme subscription information comprising second theme information;
based on the correspondence relation, determining a second publishing entity corresponding to the second theme information;
obtaining data based on the second theme information published by the second publishing entity.

Optionally, first data published by the first publishing entity based on the first theme information and second data published by the second publishing entity based on the second theme information both carry priority information;
sending module1205, configured to execute:
based on the priority information of the first data and the priority information of the second data, prioritizing the first data and the second data;
sending the first data and the second data to the subscription entity sequentially based on the result of prioritization.

Optionally, when the first publishing entity and the subscription entity being different modules in the same electronic control unit, there is a shared memory between the first publishing entity and the subscription entity;
obtaining module 1204, configured to execute:
receiving data based on the first theme information in the address space corresponding to the shared memory written by the first publishing entity;
sending module1205, configured to execute:
   sending a notification to the subscription entity, so that the subscription entity responds to the notification by reading the data based on the first theme information in the address space corresponding to the shared memory, which is written in the address space corresponding to the shared memory by the first publishing entity.

Optionally, when the first publishing entity and the subscription entity being different electronic control units, obtaining module 1204, configured to execute:
obtaining the data based on the first theme information sent by the first publishing entity through network router;
sending module1205, configured to execute:
   forwarding the data based on the first theme information sent by the first publishing entity to the subscription entity through the network router.

The device provided in the embodiment of the present application and the embodiment of method are based on the same application concept.

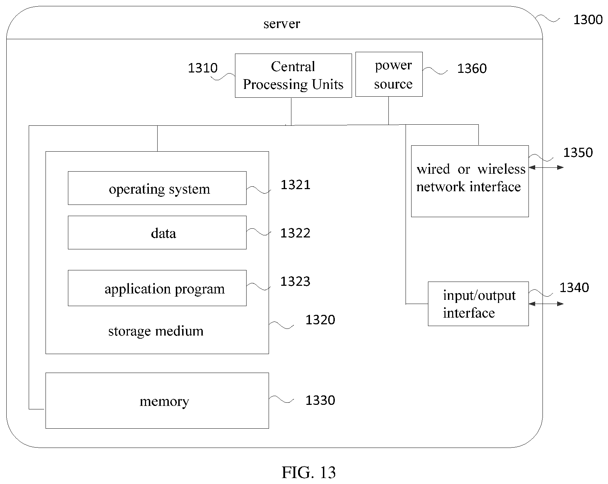

The embodiment of the method provided by the embodiment of the present application can be executed in the computer terminal, server or similar operation device. To run on the server as an example, FIG. 13 is a hardware structure block diagram the server of an on-board communication method provided in the embodiment of the present application. As shown in FIG. 13, the server 1300 may generate a large difference due to different configuration or performance, and may comprise one or more central processors (Central Processing Units, CPU) 1310 (processor 1310 may comprise but not limited to microprocessor NCU or programmable logic device FPGA processing device), a memory 1330 for storing data, one or more storage media 1320 (e.g., one or more mass storage devices) that store application programs 1323 or data 1322. wherein the memory 1330 and the storage medium 1320 may be transitory storage or persistent storage. The program stored in the storage medium 1320 may comprise one or more modules, each module may comprise a series of instruction operations in the server. Further, the central processor 1310 may be configured to communicate with the storage medium 1320, executing a series of instruction operations in the storage medium 1320 on the server 1300. The server 1300 may also comprise one or more power sources 1360, one or more wired or wireless network interfaces 1350, one or more input/output interfaces 1340, and/or one or more operating systems 1321, such as Windows, Mac. OS, Unix, Linux, FreeBSD and so on.

The input output interface 1340 may be used to receive or transmit data via a network. The above-described specific example of network may comprise a wireless network provided by a communication provider of the server 1300. In an embodiment, the input output interface 1340 comprises a Network Interface Controller (NIC), which may be connected to other network devices through the base station to communicate with the Internet. In an embodiment, the input output interface 1340 may be a radio frequency (Radio Frequency, RF) module, which is used for communicating with the Internet in a wireless manner.

Those of ordinary skill in the art will understand that the structure shown in FIG. 13 is only schematic, and it does not limit the structure of the electronic device. For example, the server 1300 may also comprise more or fewer components than shown in FIG. 13, or has a configuration different from that shown in FIG. 13.

The embodiment of the present application further provides a storage medium, the storage medium can be set in the server for storing at least one instruction, at least one section of program, code set or instruction set related to an on-board communication method in the embodiment of the method, the at least one instruction, the at least one section of program, the code set or instruction set is loaded and executed by the processor to realize the on-board communication method.

Optionally, in the present embodiment, the storage medium can be located in at least one network server of a plurality of network servers in the computer network. Optionally, in the present embodiment, the storage medium may comprise, but are not limited to: U disk, read only memory (ROM, Read-Only Memory), random access memory (RAM, Random Access Memory), mobile hard disk, disk or optical disk and so on which can store the program code of the medium.

The above embodiment of on-board communication method, apparatus and device, and a storage medium provided in the present application can be seen that, the correspondence relation of the at least one publishing entity and theme information is established in the present application, theme information being sent by the publishing entity; the theme information representing the on-board service provided by the publishing entity; receiving the first theme subscription information sent by the subscription entity; the first theme subscription information comprises the first theme information; based on the correspondence relation, determining a first publishing entity corresponding to the first theme information; obtaining data based on the first theme information published by the first publishing entity; sending the data to the subscription entity; wherein the publishing entity and the subscription entity are different electronic control units, or the publishing entity and the subscription entity are different modules in the same electronic control unit. Therefore, the application can solve the requirement of large data throughput, and the data transmission is high safety, the real-time performance is good; the invention also supports the implementation of the service-based architecture design while the satisfy requirements of the automatic driving and intelligent network system are required.

It should be noted that: the embodiment of the present application is only for description, not representing the quality of the embodiment. And the specific embodiment of the specification is described. Other embodiments are within the scope of the appended claims. In some cases, the actions or steps described in the claims can be performed according to the order different from that of the embodiment and still can achieve the desired result. In addition, the process depicted in the accompanying drawings does not necessarily require a particular order or sequential order to achieve a desired result. In some embodiments, multi-task processing and parallel processing may also be possible or may be advantageous.

Various embodiments of the specification are described by way of progressive manner, the same parts and similar parts of each embodiment are referred to each other, each embodiment focuses on the difference with other embodiments. In particular, for embodiment of apparatus, because it is substantially similar to the method embodiment, the description is simple, refer to the description of the method implementation examples for relevant information.

It will be understood by those skilled in the art that all or part of the steps of the above embodiments can be implemented by hardware, and may be implemented by a program instructing related hardware, and the program may be stored in a computer readable storage medium, and the mentioned storage medium may be a read-only memory, magnetic disk or optical disk and so on.

## Claims

1. An on-board communication method, applied to a communication management module in a data space, comprising:
establishing (S201) a correspondence relation between at least one publishing entity and theme information,
the theme information being sent by the publishing entity; the theme information representing an on-board service provided by the publishing entity;
receiving (S203) first theme subscription information sent by a subscription entity; the first theme subscription information comprising first theme information;
determining (S205), on the basis of the correspondence relationship, a first publishing entity corresponding to the first theme information;
obtaining (S207) data based on the first theme information that is published by the first publishing entity;
sending (S209) the data to the subscription entity;
wherein the publishing entity and the subscription entity are different electronic control units, or the publishing entity and the subscription entity being different modules in the same electronic control unit;
**characterized in that** the sending the data to the subscription entity, comprises:
generating a first check code corresponding to the data according to a preset check algorithm;
packaging the first check code with the data and sending to the subscription entity; the subscription entity is used for determining a second check code according to the preset check algorithm and received data, determining the accuracy of the received data based on the first check code and the second check code.

2. The method according to claim **1, characterized in that**, obtaining data based on the first theme information that is published by the first publishing entity comprises:
sending a subscription message to the first publishing entity;
receiving the data based on the first theme information that is published by the first publishing entity in response to the subscription message.

3. The method according to claim **2, characterized in that**, when the first publishing entity publishes data based on the first theme information continuously, the method further comprises:
monitoring publishing time interval between adjacent data in the data based on the first theme information that the first publishing entity continuously publishes;
and/or;
monitoring receiving time interval between adjacent data in the data based on the first theme information that the subscription entity continuously receives.

4. The method according to claim **3, characterized in that**, monitoring publishing time interval between adjacent data in the data based on the first theme information that the first publishing entity continuously publishes comprises:
if the publishing time interval between adjacent data in the data based on the first theme information that the first publishing entity continuously publishes is greater than or equal to a first preset time interval, generating a first error prompt message.

5. The method according to claim **3, characterized in that**, monitoring receiving time interval between adjacent data in the data based on the first theme information that the subscription entity continuously receives comprises:
if the receiving time interval between adjacent data in the data based on the first theme information that the subscription entity continuously receives is greater than or equal to a second preset time interval, generating a second error prompt message.

6. The method according to claim **1, characterized in that**, before sending the data to the subscription entity, the method further comprises:
receiving second theme subscription information sent by the subscription entity; the second theme subscription information comprising second theme information;
based on the correspondence relation, determining a second publishing entity corresponding to the second theme information;
obtaining data based on the second theme information published by the second publishing entity.

7. The method according to claim **6, characterized in that**, first data published by the first publishing entity based on the first theme information and second data published by the second publishing entity based on the second theme information both carry priority information;
sending the data to the subscription entity comprises:
based on the priority information of the first data and the priority information of the second data, prioritizing the first data and the second data;
sending the first data and the second data to the subscription entity sequentially based on the result of prioritization.

8. The method according to any one of claims **1-7, characterized in that**, when the first publishing entity and the subscription entity being different modules in the same electronic control unit, there is a shared memory between the first publishing entity and the subscription entity;
obtaining data based on the first theme information published by the first publishing entity comprises:
receiving data based on the first theme information in the address space corresponding to the shared memory written by the first publishing entity;
sending the data to the subscription entity comprises:
sending a notification to the subscription entity, so that the subscription entity responds to the notification by reading the data based on the first theme information in the address space corresponding to the shared memory, which is written in the address space corresponding to the shared memory by the first publishing entity.

9. The method according to any one of claims **1-7, characterized in that**, when the first publishing entity and the subscription entity being different electronic control units, obtaining data based on the first theme information published by the first publishing entity comprises:
obtaining the data based on the first theme information sent by the first publishing entity through network router;
sending the data to the subscription entity comprises:
forwarding the data based on the first theme information sent by the first publishing entity to the subscription entity through the network router.

10. A device comprising a processor and a memory, the memory stores at least one instruction or at least one section of program, the at least one instruction or the at least one program is loaded by the processor and executes the on-board communication method according to any one of Claims **1-9.**

11. A storage medium wherein the storage medium stores at least one instruction or at least one section of a program, which when the at least one instruction or at least one section of a program is loaded and executed by a processor the on-board communication method according to any one of Claims **1-9** is realized.

## Patentansprüche

1. Bordkommunikationsverfahren, das auf ein Kommunikationsverwaltungsmodul in einem Datenraum angewendet wird, umfassend:
Herstellen (S201) einer Zuordnungsbeziehung zwischen mindestens einer Veröffentlichungseinheit und Themeninformationen, wobei die Themeninformationen von der Veröffentlichungseinheit gesendet werden, wobei die Themeninformationen einen Borddienst darstellen, der von der Veröffentlichungseinheit bereitgestellt wird;
Empfangen (S203) erster Themenabonnementinformationen, die von einer Abonnementeinheit gesendet werden, wobei die ersten Themenabonnementinformationen erste Themeninformationen umfassen;
Bestimmen (S205) einer ersten Veröffentlichungseinheit, die den ersten Themeninformationen entspricht, anhand der Zuordnungsbeziehung;
Erhalten (S207) von Daten auf Basis der ersten Themeninformationen, die von der ersten Veröffentlichungseinheit veröffentlicht werden;
Senden (S209) der Daten an die Abonnementeinheit;
wobei die Veröffentlichungseinheit und die Abonnementeinheit unterschiedliche elektronische Steuergeräte sind oder die Veröffentlichungseinheit und die Abonnementeinheit unterschiedliche Module innerhalb desselben elektronischen Steuergeräts sind;
**dadurch gekennzeichnet, dass** das Senden der Daten an die Abonnementeinheit Folgendes umfasst: Erzeugen eines ersten Prüfcodes, der den Daten nach einem voreingestellten Prüfalgorithmus entspricht; Verpacken des ersten Prüfcodes zusammen mit den Daten und Senden an die Abonnementeinheit, wobei die Abonnementeinheit dazu verwendet wird, einen zweiten Prüfcode nach dem voreingestellten Prüfalgorithmus und den empfangenen Daten zu bestimmen und die Korrektheit der empfangenen Daten anhand des ersten Prüfcodes und des zweiten Prüfcodes zu bestimmen.

2. Verfahren nach Anspruch 1, **dadurch gekennzeichnet, dass** das Erhalten von Daten auf Basis der ersten Themeninformationen, die von der ersten Veröffentlichungseinheit veröffentlicht werden, Folgendes umfasst:
Senden einer Abonnementnachricht an die erste Veröffentlichungseinheit;
Empfangen der Daten auf Basis der ersten Themeninformationen, die von der ersten Veröffentlichungseinheit als Antwort auf die Abonnementnachricht veröffentlicht werden.

3. Verfahren nach Anspruch 2, **dadurch gekennzeichnet, dass**, wenn die erste Veröffentlichungseinheit kontinuierlich Daten auf Basis der ersten Themeninformationen veröffentlicht, das Verfahren ferner Folgendes umfasst:
Überwachen von Veröffentlichungszeitintervall zwischen aufeinanderfolgenden Daten in den Daten auf Basis der von der ersten Veröffentlichungseinheit kontinuierlich veröffentlichten ersten Themeninformationen;
und/oder
Überwachen von Empfangszeitintervall zwischen aufeinanderfolgenden Daten in den Daten auf Basis der von der Abonnementeinheit kontinuierlich empfangenen ersten Themeninformationen.

4. Verfahren nach Anspruch 3, **dadurch gekennzeichnet, dass** das Überwachen von Veröffentlichungszeitintervall zwischen aufeinanderfolgenden Daten in den Daten auf Basis der von der ersten Veröffentlichungseinheit kontinuierlich veröffentlichten ersten Themeninformationen Folgendes umfasst:
Falls das Veröffentlichungszeitintervall zwischen aufeinanderfolgenden Daten in den Daten auf Basis der von der ersten Veröffentlichungseinheit kontinuierlich veröffentlichten ersten Themeninformationen größer oder gleich einem ersten voreingestellten Zeitintervall ist, Erzeugen einer ersten Fehlerhinweismeldung.

5. Verfahren nach Anspruch 3, **dadurch gekennzeichnet, dass** das Überwachen von Empfangszeitintervalls zwischen aufeinanderfolgenden Daten in den Daten auf Basis der von der Abonnementeinheit kontinuierlich empfangenen ersten Themeninformationen Folgendes umfasst:
Falls das Empfangszeitintervall zwischen aufeinanderfolgenden Daten in den Daten auf Basis der von der Abonnementeinheit kontinuierlich empfangenen ersten Themeninformationen größer oder gleich einem zweiten voreingestellten Zeitintervall ist, Erzeugen einer zweiten Fehlerhinweismeldung.

6. Verfahren nach Anspruch 1, **dadurch gekennzeichnet, dass** das Verfahren vor dem Senden der Daten an die Abonnementeinheit ferner Folgendes umfasst:
Empfangen zweiter Themenabonnementinformationen, die von der Abonnementeinheit gesendet werden, wobei die zweiten Themenabonnementinformationen zweite Themeninformationen umfassen;
Bestimmen einer zweiten Veröffentlichungseinheit, die den zweiten Themeninformationen entspricht, anhand der Zuordnungsbeziehung;
Erhalten von Daten auf Basis der zweiten Themeninformationen, die von der zweiten Veröffentlichungseinheit veröffentlicht werden.

7. Verfahren nach Anspruch 6, **dadurch gekennzeichnet, dass** erste Daten, die von der ersten Veröffentlichungseinheit auf Basis der ersten Themeninformationen veröffentlicht werden, und zweite Daten, die von der zweiten Veröffentlichungseinheit auf Basis der zweiten Themeninformationen veröffentlicht werden, jeweils Prioritätsinformationen tragen,
wobei das Senden der Daten an die Abonnementeinheit Folgendes umfasst:
Priorisieren der ersten Daten und der zweiten Daten anhand der Prioritätsinformationen der ersten Daten und der Prioritätsinformationen der zweiten Daten;
Senden der ersten Daten und der zweiten Daten nacheinander an die Abonnementeinheit anhand des Priorisierungsergebnisses.

8. Verfahren nach einem der Ansprüche 1 bis 7, **dadurch gekennzeichnet, dass**, wenn die erste Veröffentlichungseinheit und die Abonnementeinheit unterschiedliche Module innerhalb desselben elektronischen Steuergeräts sind, ein gemeinsamer Speicher zwischen der ersten Veröffentlichungseinheit und der Abonnementeinheit vorhanden ist,
wobei das Erhalten von Daten auf Basis der ersten Themeninformationen, die von der ersten Veröffentlichungseinheit veröffentlicht werden, Folgendes umfasst:
Empfangen von Daten auf Basis der ersten Themeninformationen im Adressraum, der dem gemeinsamen Speicher entspricht, der von der ersten Veröffentlichungseinheit geschrieben wird,
wobei das Senden der Daten an die Abonnementeinheit Folgendes umfasst:
Senden einer Benachrichtigung an die Abonnementeinheit, sodass die Abonnementeinheit eine Antwort auf die Benachrichtigung gibt, indem sie die Daten auf Basis der ersten Themeninformationen im Adressraum liest, der dem gemeinsamen Speicher entspricht, der von der ersten Veröffentlichungseinheit in diesen Adressraum dem gemeinsamen Speicher entsprechend geschrieben wird.

9. Verfahren nach einem der Ansprüche 1 bis 7, **dadurch gekennzeichnet, dass**, wenn die erste Veröffentlichungseinheit und die Abonnementeinheit unterschiedliche elektronische Steuergeräte sind, das Erhalten von Daten auf Basis der ersten Themeninformationen, die von der ersten Veröffentlichungseinheit veröffentlicht werden, Folgendes umfasst:
Erhalten der Daten auf Basis der ersten Themeninformationen, die von der ersten Veröffentlichungseinheit über einen Netzwerkrouter gesendet werden,
wobei das Senden der Daten an die Abonnementeinheit Folgendes umfasst:
Weiterleiten der Daten auf Basis der ersten Themeninformationen, die von der ersten Veröffentlichungseinheit gesendet werden, an die Abonnementeinheit über den Netzwerkrouter.

10. Vorrichtung, umfassend einen Prozessor und einen Speicher, wobei der Speicher mindestens eine Anweisung oder mindestens ein Programmsegment speichert, wobei die mindestens eine Anweisung oder das mindestens eine Programmsegment von dem Prozessor geladen wird und das Bordkommunikationsverfahren nach einem der Ansprüche 1 bis 9 ausführt.

11. Speichermedium, wobei das Speichermedium mindestens eine Anweisung oder mindestens ein Programmsegment speichert, sodass, wenn die mindestens eine Anweisung oder das mindestens eine Programmsegment von einem Prozessor geladen und ausgeführt wird, das Bordkommunikationsverfahren nach einem der Ansprüche 1 bis 9 realisiert wird.

## Revendications

1. Procédé de communication à bord, appliqué à un module de gestion de communication dans un espace de données, comprenant
l'établissement (S201) d'une relation de correspondance entre au moins une entité de publication et des informations de thème, les informations de thème étant envoyées par l'entité de publication ; les informations de thème représentant un service à bord fourni par l'entité de publication ;
la réception (S203) de premières informations d'abonnement au thème envoyées par une entité d'abonnement ; les premières informations d'abonnement au thème comprenant des premières informations de thème ;
la détermination (S205), sur la base de la relation de correspondance, d'une première entité de publication correspondant aux premières informations de thème ;
l'obtention (S207) de données sur la base des premières informations de thème qui sont publiées par la première entité de publication :
l'envoi (S209) des données à l'entité d'abonnement ;
dans lequel l'entité de publication et l'entité d'abonnement sont des unités de commande électroniques différentes, ou l'entité de publication et l'entité d'abonnement sont des modules différents dans la même unité de commande électronique ;
**caractérisé en ce que**, l'envoi des données à l'entité d'abonnement comprend : la génération d'un premier code de vérification correspondant aux données en fonction d'un algorithme de vérification prédéfini ; la mise en paquets du premier code de vérification avec les données et l'envoi à l'entité d'abonnement ; l'entité d'abonnement sert à déterminer un second code de vérification en fonction de l'algorithme de vérification prédéfini et des données reçues, et à déterminer l'exactitude des données reçues sur la base du premier code de vérification et du second code de vérification.

2. Procédé selon la revendication 1, **caractérisé en ce que**, l'obtention de données sur la base des premières informations de thème qui sont publiées par la première entité de publication comprend :
l'envoi d'un message d'abonnement à la première entité de publication ;
la réception des données sur la base des premières informations de thème qui sont publiées par la première entité de publication en réponse au message d'abonnement.

3. Procédé selon la revendication 2, **caractérisé en ce que**, lorsque la première entité de publication publie en continu des données sur la base des premières informations de thème, le procédé comprend en outre :
la surveillance d'un intervalle de temps de publication entre des données adjacentes dans les données, sur la base des premières informations de thème que la première entité de publication publie en continu ;
et/ou ;
la surveillance d'un intervalle de temps de réception entre des données adjacentes dans les données, sur la base des premières informations de thème que l'entité d'abonnement reçoit en continu.

4. Procédé selon la revendication 3, **caractérisé en ce que**, la surveillance d'un intervalle de temps de publication entre des données adjacentes dans les données, sur la base des premières informations de thème que la première entité de publication publie en continu, comprend :
si l'intervalle de temps de publication entre des données adjacentes dans les données, sur la base des premières informations de thème que la première entité de publication publie en continu, est supérieur ou égal à un premier intervalle de temps prédéfini, la génération d'un premier message-guide d'erreur.

5. Procédé selon la revendication 3, **caractérisé en ce que**, la surveillance d'un intervalle de temps de réception entre des données adjacentes dans les données, sur la base des premières informations de thème que l'entité d'abonnement reçoit en continu, comprend :
si l'intervalle de temps de réception entre des données adjacentes dans les données, sur la base des premières informations de thème que l'entité d'abonnement reçoit en continu, est supérieur ou égal à un second intervalle de temps prédéfini, la génération d'un second message-guide d'erreur.

6. Procédé selon la revendication 1, **caractérisé en ce que**, avant d'envoyer les données à l'entité d'abonnement, le procédé comprend en outre :
la réception de secondes informations d'abonnement au thème envoyées par l'entité d'abonnement ; les secondes informations d'abonnement au thème comprenant des secondes informations de thème ;
sur la base de la relation de correspondance, la détermination d'une seconde entité de publication correspondant aux secondes informations de thème ;
l'obtention de données sur la base des secondes informations de thème publiées par la seconde entité de publication.

7. Procédé selon la revendication 6, **caractérisé en ce que**, des premières données publiées par la première entité de publication sur la base des premières informations de thème et des secondes données publiées par la seconde entité de publication sur la base des secondes informations de thème comportent toutes deux des informations de priorité ;
l'envoi des données à l'entité d'abonnement comprend :
sur la base des informations de priorité des premières données et des informations de priorité des secondes données, l'établissement d'un ordre de priorité entre les premières données et les secondes données ;
l'envoi séquentiel des premières données et des secondes données à l'entité d'abonnement en fonction du résultat de l'établissement de l'ordre de priorité.

8. Procédé selon l'une quelconque des revendications 1 à 7, **caractérisé en ce que**, lorsque la première entité de publication et l'entité d'abonnement sont des modules différents dans la même unité de commande électronique, il existe une mémoire partagée entre la première entité de publication et l'entité d'abonnement ;
l'obtention de données sur la base des premières informations de thème publiées par la première entité de publication comprend :
la réception de données sur la base des premières informations de thème dans l'espace d'adressage correspondant à la mémoire partagée, écrites par la première entité de publication ;
l'envoi des données à l'entité d'abonnement comprend :
l'envoi d'une notification à l'entité d'abonnement, de sorte que l'entité d'abonnement réponde à la notification en lisant les données sur la base des premières informations de thème dans l'espace d'adressage correspondant à la mémoire partagée, qui sont écrites dans l'espace d'adressage correspondant à la mémoire partagée par la première entité de publication.

9. Procédé selon l'une quelconque des revendications 1 à 7, **caractérisé en ce que**, lorsque la première entité de publication et l'entité d'abonnement sont des unités de commande électroniques différentes, l'obtention de données sur la base des premières informations de thème publiées par la première entité de publication comprend :
l'obtention des données sur la base des premières informations de thème envoyées par la première entité de publication via un routeur réseau ;
l'envoi des données à l'entité d'abonnement comprend :
la transmission des données sur la base des premières informations de thème envoyées par la première entité de publication à l'entité d'abonnement via le routeur réseau.

10. Dispositif comprenant un processeur et une mémoire, dans lequel la mémoire stocke au moins une instruction ou au moins une section de programme, l'au moins une instruction ou l'au moins un programme est chargé(e) par le processeur et exécute le procédé de communication à bord selon l'une quelconque des revendications 1 à 9.

11. Support de stockage, dans lequel le support de stockage stocke au moins une instruction ou au moins une section d'un programme, de sorte que, lorsque l'au moins une instruction ou l'au moins une section d'un programme est chargée et exécutée par un processeur, le procédé de communication à bord selon l'une quelconque des revendications 1 à 9 soit mis en œuvre.
